# EUROPÄISCHE PATENTSCHRIFT

(11) **EP 1 197 418 B1**
(45) Veröffentlichungstag und Bekanntmachung des Hinweises auf die Patenterteilung: **04.05.2005**
(21) Anmeldenummer: 01250330.6
(22) Anmeldetag: 19.09.2001
(51) Int. Cl.: B61L 21/00, G06F 11/16

(54) **Verfahren zum Steuern eines sicherheitskritischen Bahnbetriebsprozesses und Einrichtung zur Durchführung dieses Verfahrens**
Control method for a safety critical railway operation process and device for carrying out this method
Pocédé de commande pour un processus à sécurité critique dans le service ferroviaire et dispositif pour mettre en oeuvre ce procédé

(30) Priorität: 13.10.2000 DE 10053023
(43) Veröffentlichungstag der Anmeldung: 17.04.2002
(73) Patentinhaber: SIEMENS AKTIENGESELLSCHAFT, 80333 München (DE)
(72) Erfinder: Goericke, Volker, 38302 Wolfenbuettel (DE); Prade, Bernd, 38271 Baddeckenstedt (DE); Schiwasinske, Ralf, 38126 Braunschweig (DE)

(56) Entgegenhaltungen:
- EP-A- 0 132 548
- EP-A- 0 503 336
- WO-A-92/03787

## Beschreibung

Die Erfindung bezieht sich auf ein Verfahren nach dem Oberbegriff des Patentanspruches 1 sowie auf eine Einrichtung zur Durchführung dieses Verfahrens nach dem Oberbegriff des Patentanspruches 12.

Bahnbetriebsprozesse gehören zu den sicherheitskritischen Prozessen, weil etwaige Fehlfunktionen, sollten sie nicht rechtzeitig erkannt und ihre Auswirkung auf den Prozess verhindert werden, zu erheblichen Sachschäden und gegebenenfalls auch zu Personengefährdungen führen können. Aus diesem Grunde werden für die Steuerung solcher Prozesse bislang signaltechnisch sichere Einrichtungen eingesetzt, deren Aufgabe es ist, Fehlfunktionen sowohl innerhalb des zu steuernden Prozesses als auch innerhalb der Prozesssteuerung selbst zu erkennen und den Prozess daraufhin in einen sicheren Zustand zu führen bzw. zu belassen. Solche signaltechnisch sicheren Steuerungen können in unterschiedlichen Techniken ausgeführt sein, beispielsweise in Relaistechnik oder in elektronischer Technik. Bei der signaltechnisch sicheren Prozesssteuerung über Rechner werden bislang teuere Spezialrechner eingesetzt, die die anstehenden Verarbeitungsaufträge zweikanalig abarbeiten und sich laufend signaltechnisch sicher auf inhaltlich übereinstimmende Verarbeitungsabläufe vergleichen. Eine Ausgabe erarbeiteter Stellbefehle an die Prozesselemente des zu steuernden Prozesses erfolgt nur, wenn beide Verarbeitungskanäle jeweils zum gleichen Ergebnis gelangt sind; andernfalls wird die Verbindung zum Prozess hin unterbrochen, es sei denn, es gibt mindestens einen Reserverechner, der die Funktionen des ausgefallenen Rechners übernehmen kann und tatsächlich übernimmt.

Die vorgenannten Funktionen der sicheren Ein- und Ausgabe von Daten sowie des Datenvergleichs mit gegebenenfalls sicherer Abschaltung von Prozesselementen werden veranlasst durch die Systemsoftware der sicheren Rechner. Daneben beinhalten die sicheren Rechner bislang auch noch die bahnverwaltungsspezifische Software für die eigentliche Prozesssteuerung, z.B. den Stellwerksbetrieb. Die bahnverwaltungsspezifische Software wird bestimmt durch die Betriebsordnung der jeweiligen Bahnverwaltung und beschreibt z. B. die von ihr vorgegebenen Abhängigkeiten der Fahrstraßeneinstellung und der Fahrstraßenauflösung (Signal+Draht,77(1985)12, S.259-265). Die bahnverwaltungsspezifische Software ist nicht nur von Bahnverwaltung zu Bahnverwaltung verschieden, sondern mindestens partiell auch von Anlage zu Anlage der gleichen Bahnverwaltung. Das bedeutet, dass die in einen signaltechnisch sicheren Rechner zu ladende und dort ablaufende Software von Anwendungsfall zu Anwendungsfall verschieden ist, wobei für jeden Anwendungsfall die Fehlerfreiheit der geladenen Software durch einen Sicherheitsnachweis nachgewiesen oder glaubhaft gemacht werden muss. Dies führt durch die Vermengung der Systemsoftware und der bahnverwaltungsspezifischen Software in jedem Rechner zu komplexen Softwarepaketen, die schlecht überschaubar sind und die zeitaufwendig und teuer in der Erstellung und in der Prüfung sind. Ein weiteres Beispiel einer signaltechnisch-sicheren Steuerung offenbart EP 0503336 A2.

Aufgabe der vorliegenden Erfindung ist es, ein Verfahren zum Steuern eines sicherheitskritischen Bahnbetriebsprozesses nach dem Oberbegriff des Patentanspruches 1 anzugeben, das weniger aufwendig ist in der Erstellung der für die sichere Prozesssteuerung erforderlichen Programme und das es ermöglicht, auf etwaige geänderte Anforderungen eines Bahnbetreibers an die Prozesssteuerung rasch und kostengünstig zu reagieren. Es ist ferner Aufgabe der Erfindung, eine Einrichtung zur Durchführung dieses Verfahrens anzugeben.

Die Erfindung löst diese Aufgabe durch die Merkmale des Anspruches 1 bzw. des Anspruches 12. Die Grundidee der Erfindung besteht darin, die bahnverwaltungsspezifische Software aus dem oder den signaltechnisch sicheren Rechnern auf kommerzielle Rechner auszulagern, die Daten dort jeweils mindestens zweimal zu verarbeiten und vor Ausgabe an den Prozess in den signaltechnisch sicheren Rechnern sicher auf Übereinstimmung zu prüfen. Die signaltechnisch sicheren Rechnern haben neben der Aufgabe des Datenvergleichs im Wesentlichen noch die Aufgabe, die eingehenden Meldungen und Kommandos sicher zu erfassen und an die kommerziellen Rechnern zu übermitteln sowie sicher auf die Prozesselemente einzuwirken und im Störungsfall die Verbindung zu den Prozesselementen signaltechnisch sicher zu unterbrechen.

Vorteilhafte Ausgestaltungen und Weiterbildungen des erfindungsgemäßen Verfahrens bzw. der erfindungsgemäßen Einrichtung sind in den Unteransprüchen angegeben.

Die Erfindung ist nachstehend anhand eines in der Zeichnung dargestellten Ausführungsbeispieles näher erläutert. Die Zeichnung zeigt in
- Figur 1: schematisch den Aufbau der erfindungsgemäßen Einrichtung zur Steuerung eines sicherheitskritischen Bahnbetriebsprozesses und in
- Figur 2: den Aufbau einer entsprechenden nach dem Stand der Technik ausgeführten Einrichtung.

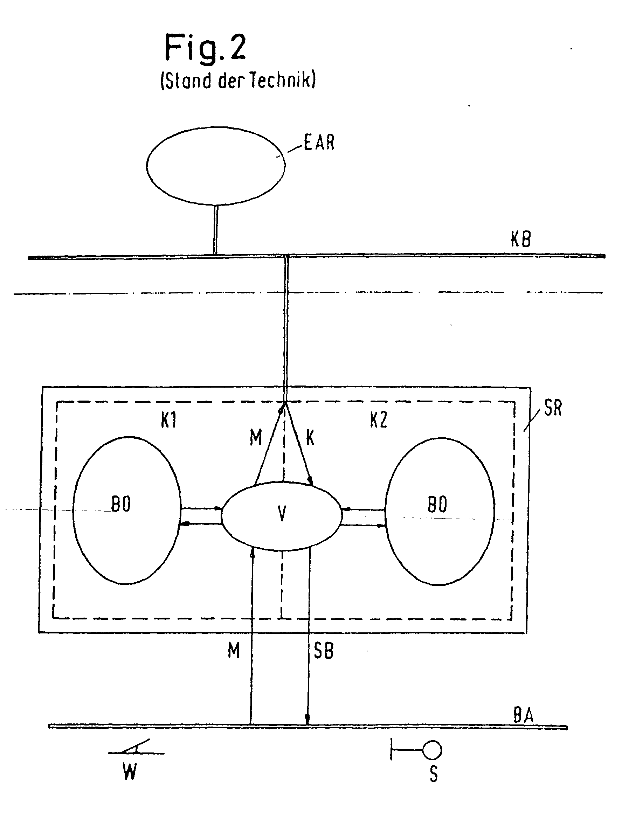

Figur 2 zeigt einen bekannten signaltechnisch sicheren Rechner SR zur Bearbeitung eines Prozesses über vorzugsweise identische Verarbeitungsprogramme in zwei unabhängigen Verarbeitungskanälen K1,K2. Der sichere Rechner SR steht für eine beliebige Anzahl von signaltechnisch sicheren Rechnern; ihre Anzahl richtet sich im Wesentlichen nach der Größe des zu steuernden Prozesses. Der zu steuernde Prozess ist ein Bahnbetriebsprozess, mit dem auf eine Bahnanlage BA eingewirkt werden soll. Stellvertretend für die Prozesselemente der Bahnanlage sind in der Zeichnung eine Weiche W und ein Signal S angedeutet. Die Steuerung und die Überwachung der Prozesselemente geschieht durch dafür entwickelte Steuer- und Überwachungsschaltungen, die in der Zeichnung nicht explizit dargestellt sind und über die vom sicheren Rechner SR Stellbefehle SB an die Prozesselemente ausgegeben und von dort Meldungen M in den sicheren Rechner eingegeben werden.

Der signaltechnisch sichere Rechner SR gibt die ihm vom Prozess übermittelten Meldungen M über einen Kommunikationsbus KB an einen Eingabe- und Anzeigerechner EAR aus. Dieser dient u.a. der Überwachung des Bahnbetriebsprozesses nach in der jeweiligen Bahnbetriebsordnung festgelegten Darstellungsregeln; er ist vorzugsweise als signaltechnisch verfahrensgesicherter Rechner ausgeführt. Über den Eingabe- und Anzeigerechner EAR werden auch die Kommandos K zur Steuerung des Bahnbetriebsprozesses erzeugt und an den signaltechnisch sicheren Rechner SR übertragen. Die Eingabe kann dabei durch einen Bediener, z. B. einen Fahrdienstleiter, erfolgen oder aber durch eine Automatik z. B. für den Selbststellbetrieb oder den Durchleitbetrieb.

Die Meldungen und Kommandos werden im signaltechnisch sicheren Rechner nach den in der jeweiligen Betriebsordnung eines Bahnbetreibers festgelegten Bedingungen und Abhängigkeiten zweikanalig verarbeitet. Die auf den Bussen der beiden Verarbeitungssysteme jeweils anliegenden Daten, Adressen und Steuersignale werden laufend signaltechnisch sicher miteinander verglichen, um etwaige Abweichungen sofort erkennen zu können. Prüfprogramme sorgen dabei dafür, dass die Ein/Ausgaberegister des sicheren Rechners sowie seine _{P}rogramm- und Arbeitsspeicher und seine Adressenregister innerhalb vorgegebener Mindestzeitspannen daraufhin überprüft werden, ob ihre Speicher sowohl den einen als auch den anderen Zustand einnehmen können. Etwaige Fehlfunktionen werden so ereignis- oder zeitgesteuert erkannt und führen zum sicheren Abschalten der Außenanlagen: Stellbefehle an Weichen können dann nicht mehr ausgegeben werden und die Signale gehen auf Halt.

Dadurch, dass die durch die jeweilige Betriebsordnung einer Bahnverwaltung vorgegebenen Bedingungen und Abhängigkeiten, in der Zeichnung repräsentiert durch elliptische Platzhalter BO, in den Programmspeichern des sicheren Rechners SR hinterlegt und mit der Systemsoftware vermengt sind, ist die zur Steuerung des Bahnbetriebsprozesses in den sicheren Rechnern hinterlegte Softwaren eine individuelle Software, die sehr komplex und sowohl in der Erstellung als auch in der Prüfung außerordentlich aufwendig ist.

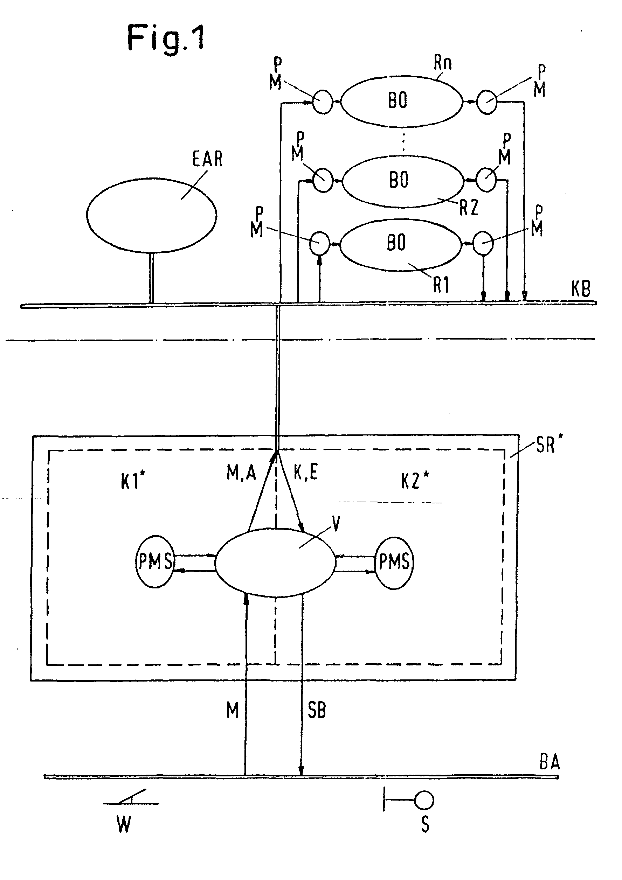

Bei der in Figur 1 dargestellten erfindungsgemäßen Einrichtung zur Steuerung eines Bahnbetriebsprozesses gibt es ebenfalls mindestens einen signaltechnisch sicheren Rechner SR* mit zwei vorzugsweise identisch aufgebauten und identisch betriebenen Verarbeitungskanälen K1* und K2*. Seine Aufgabe ist es, ähnlich der des signaltechnisch sicheren Rechners SR nach dem Stand der Technik, alle ihm zugeführten Meldungen M und Kommandos K sicher zu erfassen und der Verarbeitung zuzuführen. Ferner ist es seine Aufgabe, signaltechnisch sicher erarbeitete Stellbefehle SB an die Prozesselemente W, S der jeweiligen Bahnanlage BA auszugeben bzw. dafür zu sorgen, dass die Ausgabe derartiger Stellbefehle im Störungsfall signaltechnisch sicher unterbleibt. Die Abarbeitung der durch die jeweilige Bahnbetriebsordnung BO definierten Bedingungen und Abhängigkeiten für die Steuerung und Überwachung des Bahnbetriebsprozesses geschieht im Gegensatz zum Stand der Technik nicht in dem oder in den signaltechnisch sicheren Rechnern SR*, sondern in kommerziellen Rechnern R1, R2, ... Rn, in denen auch die anlagenspezifischen Daten für die Steuerung des Bahnbetriebsprozesses hinterlegt sind; die Rechner R1, R2 stehen stellvertretend für ein oder mehrere Rechnerpaare, wobei jeder Rechner auch mehreren Paaren angehören kann; aus drei Rechnern ließen sich also drei Rechnerpaare bilden. Sie führen ihnen vom sicheren Rechner SR* zugeführte Verarbeitungsaufträge A jeder für sich unabhängig vom jeweils anderen nach den für die Prozesssteuerung in der jeweiligen Bahnbetriebsordnung BO festgelegten Bedingungen und Abhängigkeiten durch. Die beiden Rechner eines jeden kommerziellen Rechnerpaares R1, R2 übermitteln ihre Arbeitsergebnisse an den signaltechnisch sicheren Rechner SR*, wobei der zeitlich erste Rechner R1 oder R2 einen Wartepunkt mit Zeitüberwachung erzwingt, an dem auf das Arbeitsergebnis des oder der weiteren Rechner gewartet wird, oder bei Zeitüberschreitungen eine Störungsbehandlung durchgeführt wird. Prüfmechanismen PM für die Plausibilität der den kommerziellen Rechnerpaaren R1, R2 zugeführten Meldungen und der Signaturen der von ihnen erarbeiteten Ausgaben und Speicherbereiche sind in Figur 1 schematisch angedeutet . Die über den Eingabe - und Anzeigerechner EAR dem sicheren Rechner SR* zugeführten Kommandos K werden von diesem in Verarbeitungsaufträge A umgesetzt und in Form von Telegrammen an die kommerziellen Rechner R1, R2 übermittelt; sie führen dort zur Abarbeitung nach den Bedingungen und Abhängigkeiten der jeweiligen Bahnbetriebsordnung BO.

Für den Fall, daß bei der Abarbeitung der bahnverwaltungsspezifischen Software durch die kommerziellen Rechner von diesen Programmpunkte erreicht werden, die die Weiterbehandlung der Programme erst nach einer vorgegebenen Wartezeit vorsehen, sorgt der signaltechnisch sichere Rechner auf entsprechende Anforderung der kommerziellen Rechner für ein Synchronisation der Verarbeitungsprogramme der kommerziellen Rechner zur Weiterbehandlung der Programme nach Ablauf der Wartezeit. Beispielsweisen sollen nach Ablauf einer Wartezeit von mehreren Sekunden von den kommerziellen Rechnern bestimmte Sensormeldung eingelesen und bewertet werden.

Die von dem kommerziellen Rechnerpaar R1, R2 ermittelten Verarbeitungsergebnisse E werden als Telegramme dem signaltechnisch sicheren Rechner SR* zugeführt, dort signaltechnisch sicher auf die beiden Verarbeitungskanäle K1*, K2* verteilt und signaltechnisch sicher auf Übereinstimmung verglichen. Für das sichere Verteilen von Meldungen und das sichere Vergleichen der von den kommerziellen Rechnern R1, R2 erarbeiteten Ergebnisse steht in der Zeichnung der Funktionsblock V, in dem die diesbezüglichen Programme als Systemsoftware hinterlegt sind. Die Prüfmechanismen PMS des signaltechnisch sicheren Rechners sind signaltechnisch sicher ausgeführt im Gegensatz zu den Prüfmechanismen PM der kommerziellen Rechner R1, R2.

Der besondere Vorteil der erfindungsgemäßen Einrichtung gegenüber einer entsprechenden nach dem Stand der Technik ausgebildeten Einrichtung ist der, dass im signaltechnisch sicheren Rechner immer nur die Funktionen der sicheren Ein- und Ausgabe und des sicheren Datenvergleichs zu realisieren sind und zwar unabhängig von den durch die Betriebsordnungen der einzelnen Bahnverwaltungen jeweils festgelegten Anforderungen und Bedingungen. Damit wird nicht nur die im sicheren Rechner oder in den sicheren Rechnern ablaufende Systemsoftware einfach und übersichtlich; sie ist vielmehr für alle Anwendungsfälle gleich, muss also nicht mehr neu von Fall zu Fall erarbeitet und einer Zulassungsprüfung unterzogen werden. Die bahnverwaltungsspezifische Software, die durch die unterschiedlichen Betriebsordnungen der einzelnen Bahnverwaltungen bestimmt wird, läuft in den kommerziellen Rechnern ab. Ihr Zusammenwirken mit der Systemsoftware der sicheren Rechner muss nicht geprüft werden. Vielmehr ist lediglich erforderlich, die spezifizierte Schnittstelle zwischen signaltechnisch sicherem und kommerziellem Rechner einzuhalten und die in den kommerziellen Rechnern zu implementierende bahnverwaltungsspezifische Software in sich auf ihre Funktionalität zu prüfen, d. h. zu prüfen, ob bestimmte Eingaben auch tatsächlich zu bestimmten Ausgaben führen. Diese Funktionalitätsprüfung findet getrennt von der Prüfung der Systemsoftware statt und ist -anders als beim Stand der Technik- nicht mehr eingebunden in die Systemsoftware der sicheren Rechner, die ihrerseits auch übersichtlicher ist als beim Stand der Technik.

Die Erarbeitung der bahnverwaltungsspezifischen Software muss nicht zwangsweise bei dem für die signaltechnische Sicherheit des Prozessgeschehens verantwortlichen Hersteller für die signaltechnisch sicheren Rechner erfolgen. Vielmehr ist es möglich, Aufträge zur Erarbeitung der Programme für die kommerziellen Rechner an qualifizierte Ingenieurbüros oder dergleichen zu vergeben, die die von ihnen erarbeitet Software mit der jeweiligen Bahnverwaltung und z. B. einer Genehmigungsbehörde wie dem Eisenbahnbundesamt abzugleichen haben. Damit wird es möglich, die Programme zum Steuern und Überwachen eines sicherheitskritischen Bahnbetriebsprozesses sehr viel schneller und preiswerter als bisher den jeweiligen Gegebenheiten anzupassen, ohne dass dadurch irgend welche Einbußen an Sicherheit in Kauf genommen werden müssen.

Bei dem vorstehend erläuterten Ausführungsbeispiel stehen die kommerziellen Rechner R1, R2 für ein- oder mehrere Doppelrechnersysteme oder mit redundanten Rechnern versehene Rechnersysteme, in deren Einzelrechnern jeweils identische Programme zum Abarbeiten der durch die jeweilige Bahnbetriebsordnung vorgegebenen Bedingungen und Abhängigkeiten ablaufen sollen, wobei von den einzelnen kommerziellen Rechnern vorzugsweise entweder jeweils nur bestimmte Teilfunktionen der Betriebsordnung zu realisieren sind oder aber jeweils nur auf bestimmte Teile der Bahnanlagen einzuwirken ist. Die Anordnung kann aber auch so getroffen sein, dass es sich bei den kommerziellen Rechnern R1, R2 jeweils um Einzelrechner handelt, in denen die durch die Betriebsordnung einer Bahnverwaltung bestimmten Programme der bahnverwaltungsspezifischen Software mehrmals, mindestens jedoch zweimal nacheinander unabhängig voneinander abgearbeitet werden. Die hierfür erforderliche bahnverwaltungsspezifische Software kann diversitär ausgelegt sein oder aber für beide Verarbeitungsvorgänge inhaltlich gleich sein.

Für die Übermittlung der von den kommerziellen Rechnern erarbeiteten Ergebnissen an den oder die signaltechnisch sicheren Rechner kommt vorzugsweise eine nicht signaltechnisch sichere Datenübertragung infrage, bei der entweder die zweikanalig seriell oder parallel erarbeiteten Ergebnisse auf zwei Kanälen an den oder die sicheren Rechner übermittelt werden oder aber bei der sie über nur einen Kanal zweimal nacheinander übermittelt werden. Ein zweiter oder dritter redundanter Kanal erhöht die Verfügbarkeit. Etwaige Datenverfälschungen auf dem Übertragungsweg von den kommerziellen Rechnern zu den signaltechnisch sicheren Rechnern und umgekehrt sind im empfangenden Rechner durch eine vom absendenden Rechner eingetragene Signatur erkennbar, die den Telegramminhalt über eine Rechenvorschrift kodiert. Bei der seriellen Übertragung von Daten an die sicheren Rechner sind den Daten Kennungen beizugeben, die es den signaltechnisch sicheren Rechnern ermöglichen, zu erkennen, ob die übermittelten Daten aktuell sind und tatsächlich aus unterschiedlichen Rechnerkanälen der kommerziellen Rechnern stammen bzw. das Ergebnis unterschiedlicher Verarbeitungsvorgänge sind; bei der Datenübertragung über getrennte Busse können die signaltechnisch sicheren Rechner aus den ihnen über den einen oder anderen Bus übermittelten Daten erkennen, ob diese Daten auch tatsächlich von dem einen oder anderen Rechner eines kommerziellen Rechnerpaares stammen oder nicht.

In vorteilhafter Ausgestaltung der Erfindung können der oder die kommerziellen Rechner als sogenannte Bedienplatzrechner ausgeführt sein, über die von einem Bahnbediensteten oder von einer Automatik Kommandos zur Ausführung an den Bahnbetriebsprozess ausgegeben und die Rückmeldungen des Bahnbetriebsprozesses visualisiert werden können. In den Bedienplatzrechnern laufen dann unabhängig voneinander die Programme zur Eingabe und Visualisierung von Kommandos und Meldungen und die Programme ab, über die die Prozesselemente entsprechend der Bahnbetriebsordnung gesteuert werden. Die Programme für die Kommandoeingabe und die Visualisierung des Prozessgeschehens können auch mit den Programmen zur Prozesssteuerung, wie sie durch die Bahnbetriebsordnung jeweils vorgegeben sind, kombiniert sein.

Der oder die signaltechnisch sicheren Rechner können auch als m von n-Rechnersystem ausgeführt sein, bei denen die Entscheidung darüber, ob und welche Stellbefehle an den Prozess ausgegeben werden sollen, durch Mehrheitsentscheidung von mindestens zwei intakten Rechnern getroffen wird.

Die Ausgabe der Stellbefehle an den Prozess geschieht zweikanalig; jeder Rechner hat die Möglichkeit, die Ausgabe von Stellbefehlen beim Feststellen von Verarbeitungsfehlern zu verhindern.

Das erfindungsgemäße Verfahren und die erfindungsgemäße Einrichtung lassen sich für alle sicherheitskritischen Bahnbetriebsprozesse mit Vorteil anwenden. Eine solche Anwendung kann z. B. die sichere Steuerung eines Bahnbetriebes durch ein Stellwerk sein aber auch z. B. die sichere Steuerung eines Bahnüberganges, einer Achszählanlage sowie von Streckenund Fahrzeuggeräten einer Linienzugbeeinflussung (LZB).

## Patentansprüche

1. Verfahren zum Steuern eines sicherheitskritischen Bahnbetriebsprozesses unter Verwendung mindestens eines signaltechnisch sicheren Rechners, der aus eingehenden Kommandos nach Maßgabe einer Bahnbetriebsordnung signaltechnisch sicher erarbeitete Stellbefehle signaltechnisch sicher an Prozesselemente ausgibt und von dort stammende Meldungen einer Prozesszustandsüberwachung und Prozesssteuerung zuführt,
**dadurch gekennzeichnet,**
**dass** im sicheren Rechner (SR*) lediglich eine System-Software (V,PMS) hinterlegt wird, deren Programme den sicheren Rechner befähigen, eine signaltechnisch sichere Ein/Ausgabe und den signaltechnisch sicheren Datenvergleich vorzunehmen,
und **dass** die bahnverwaltungsspezifische Software (BO), die die von einer Bahnverwaltung durch deren Bahnbetriebsordnung vorgegebenen Bedingungen und Abhängigkeiten für den Bahnbetriebsprozess beinhaltet, in mindestens einem nicht signaltechnisch sicheren kommerziellen Rechner (R1,R2) hinterlegt wird,
**dass** vom signaltechnisch sicheren Rechner aus den ihm zugeführten Kommandos (K) und Meldungen (M) Verarbeitungsaufträge (A) erzeugt und an den oder die kommerziellen Rechner übermittelt werden,
**dass** die Verarbeitungsaufträge dort mindestens zweimal unabhängig voneinander abgearbeitet werden,
**dass** die dabei erarbeiteten Ergebnisse (E) und/oder Zwischenergebnisse an den sicheren Rechner übermittelt und dort signaltechnisch sicher auf inhaltliche Übereinstimmung geprüft werden,
wobei vom sicheren Rechner nur solche Ergebnisse und/oder Zwischenergebnisse akzeptiert und daraus ableitbare Stellbefehle (SB) signaltechnisch sicher an den Prozess (BA) ausgegeben werden, die von dem kommerziellen Rechner mindestens zweifach übereinstimmend zur Verfügung gestellt wurden.

2. Verfahren nach Anspruch 1,
**dadurch gekennzeichnet,**
**dass** für das mindestens zweimalige Abarbeiten von Verarbeitungsaufträgen im kommerziellen Rechner identische oder diversitäre Software verwendet wird.

3. Verfahren nach Anspruch 1 oder 2,
**dadurch gekennzeichnet,**
**dass** die bei der Abarbeitung der bahnverwaltungsspezifischen Software (BO) sich ergebenden Zeitereignisse vom signaltechnisch sicheren Rechner (SR*) auf Anforderung der kommerziellen Rechner synchronisiert werden.

4. Verfahren nach einem der Ansprüche 1 bis 3,
**dadurch gekennzeichnet,**
**dass** die vom kommerziellen Rechner ermittelten Ergebnissen und/oder Zwischenergebnisse über nicht signaltechnisch sichere Kommunikationskanäle an den sicheren Rechner übermittelt werden.

5. Verfahren nach einem der Ansprüche 1 bis 4,
**dadurch gekennzeichnet,**
**dass** eine telegrammweise Datenübertragung vorgesehen ist und dass den Telegrammen Signaturen beigegeben werden, aus denen der jeweils empfangende Rechner erkennen kann, ob diese Telegramme unverfälscht übertragen wurden.

6. Verfahren nach einem der Ansprüche 1 bis 5,
**dadurch gekennzeichnet,**
**dass** eine telegrammweise Datenübertragung vorgesehen ist und dass den Telegrammen Signaturen beigegeben werden, aus denen der signaltechnisch sichere Rechner erkennen kann, ob in den Programm- und Datenspeichern der kommerziellen Rechner Verfälschungen aufgetreten sind oder die CPU eines kommerziellen Rechners nicht mehr korrekt arbeitet.

7. Verfahren nach einem der Ansprüche 1 bis 6,
**dadurch gekennzeichnet,**
**dass** die Verarbeitungsaufträge in mindestens jeweils zwei kommerziellen Rechnern (R1,R2) im wesentlichen zeitgleich abgearbeitet werden oder zeitlich seriell in nur einem einzigen Rechner und **dass** die ermittelten Ergebnisse und/oder Zwischenergebnisse dem sicheren Rechner für den Vergleich jeweils paarweise zugeführt werden.

8. Verfahren nach Anspruch 7,
**dadurch gekennzeichnet,**
**dass** den Telegrammen Kennungen beigegeben werden, aus denen der sichere Rechner erkennen kann, ob diese Telegramme tatsächlich getrennt erarbeitet wurden.

9. Verfahren nach Anspruch 7,
**dadurch gekennzeichnet,**
**dass** von dem sicheren Rechner anhand der ihm über verschiedene Eingänge zugeführten Ergebnismeldungen der kommerziellen Rechner erkannt wird, ob diese Telegramme von verschiedenen Rechnern stammen.

10. Verfahren nach einem der Ansprüche 1 bis 9,
**dadurch gekennzeichnet,**
**dass** systematische Fehler in der Betriebssystem-Software (BO) der kommerziellen Rechner durch Einsatz von diversitären Betriebssystemen auf den beteiligten Rechnern (R1 bis Rn) ausgeschlossen werden.

11. Verfahren nach einem der Ansprüche 1 bis 10,
**dadurch gekennzeichnet,**
**dass** systematische Fehler in der Hardware der kommerziellen Rechner durch Einsatz von diversitären Rechnerkomponenten auf den beteiligten Rechnern (R1 bis Rn) ausgeschlossen werden.

12. Einrichtung zur Durchführung eines Verfahrens zum Steuern eines sicherheitskritischen Bahnbetriebsprozesses mit mindestens einem signaltechnisch sicheren Rechner, der aus eingehenden Kommandos nach Maßgabe einer Bahnbetriebsordnung signaltechnisch sicher erarbeitete Stellbefehle für Prozesselemente ausgibt und von dort stammende Meldungen einer Prozesszustandsüberwachung und Prozesssteuerung zuführt,
**dadurch gekennzeichnet,**
**dass** im signaltechnisch sicheren Rechner (SR*) lediglich noch eine System-Software implementiert ist, deren Programme den sicheren Rechner befähigen, die signaltechnisch sichere Ein/Ausgabe (K,E,M,A,SB) und den signaltechnisch sicheren Datenvergleich vorzunehmen,
und **dass** mindestens ein nicht signaltechnisch sicherer kommerzieller Rechner (R1, R2) vorgesehen ist, in dem die bahnverwaltungsspezifische Software implementiert ist, die die von einer Bahnverwaltung durch ihre Bahnbetriebsordnung (BO) vorgegebenen Bedingungen und Abhängigkeiten für die Steuerung des Bahnbetriebsprozesses beinhaltet,
**dass** der sichere Rechner und der kommerzielle Rechner an ein Kommunikationssystem (BUS) angeschlossen sind, über das der sichere Rechner Verarbeitungsaufträge (A) an den kommerziellen Rechner übermittelt und von dort Ergebnisse (E) und/oder Zwischenergebnisse erhält,
wobei der kommerzielle Rechner dazu eingerichtet ist, jeden Verarbeitungsauftrag mindestens zweimal unabhängig voneinander auszuführen,
**dass** der sichere Rechner die ihm vom kommerziellen Rechner mindestens jeweils paarweise übermittelten Ergebnisse und/oder Zwischenergebnisse signaltechnisch sicher auf inhaltliche Übereinstimmung prüft und in Abhängigkeit vom Prüfungsergebnis daraus Stellbefehle (SB) für Prozesselemente (W, S) ableitet und ihre Ausgabe an den Prozess über dafür vorgesehene Treiber veranlasst.

13. Einrichtung nach Anspruch 12,
**dadurch gekennzeichnet,**
**dass** auch im kommerziellen Rechner nur Programme (BO) installiert sind, deren Funktionalität nachgewiesen wurde.

14. Einrichtung nach Anspruch 12 oder 13,
**dadurch gekennzeichnet,**
**dass** der kommerzielle Rechner die Verarbeitungsaufträge mit identischer oder diversitärer Software jeweils mindestens zweimal abarbeitet.

15. Einrichtung nach einem der Ansprüche 12 bis 14,
**dadurch gekennzeichnet,**
**dass** mindestens zwei die gleichen Verarbeitungsaufträge paarweise unabhängig voneinander abarbeitende kommerzielle Rechner vorgesehen sind.

16. Einrichtung nach einem der Ansprüche 12 bis 15,
**dadurch gekennzeichnet,**
**dass** zur Abarbeitung unterschiedlicher Funktionalitäten oder Teilfunktionalitäten oder zum Steuern und Überwachen unterschiedlicher Anlagenteile jeweils mehrere kommerzielle Rechner (R1, R2) in Einrechner- oder Mehrrechnerausführung vorgesehen sind.

17. Einrichtung nach einem der Ansprüche 12 bis 16,
**dadurch gekennzeichnet,**
**dass** der mindestens eine kommerzielle Rechner ein Bedienplatzrechner ist, über den Kommandos (K) an den sicheren Rechner einzugeben und Meldungen (M) zur Anzeige zu bringen sind.

18. Einrichtung nach einem der Ansprüche 12 bis 17,
**dadurch gekennzeichnet,**
**dass** der sichere Rechner ein m v n-Rechnersystem ist.

19. Einrichtung nach einem der Ansprüche 12 bis 18,
**dadurch gekennzeichnet,**
**dass** der sichere Rechner dazu eingerichtet ist, aus Kennungen, die den von dem mindestens einen kommerziellen Rechner übermittelten Ergebnissen und/oder Zwischenergebnissen beigegeben sind, zu erkennen, ob diese Ergebnisse und/oder Zwischenergebnisse aus verschiedenen Verarbeitungsprozessen stammen.

20. Einrichtung nach Anspruch 12,
**dadurch gekennzeichnet,**
**dass** der sichere Rechner etwaige Stellbefehle zweikanalig an den Prozess ausgibt.

## Claims

1. Method for controlling a safety-critical railway operating process using at least one computer which is reliable in terms of signalling technology and which outputs to process elements in a way which is reliable in terms of signalling technology control instructions produced reliably in terms of signalling technology from incoming commands in accordance with a set of railway operating rules, and feeds messages originating from said process elements to a process state monitoring system and process control system, **characterized in that** only one system software package (V, PMS), whose programs enable the reliable computer to perform inputting/outputting which is reliable in terms of signalling technology and the data comparison which is reliable in terms of signal technology, is stored in the reliable computer (SR*), and **in that** the railway administration-specific software (BO) which includes the conditions and dependencies predefined for the railway operating process by a railway administration by means of its set of railway operating rules, is stored in at least one commercial computer (R1, R2) which is not reliable in terms of signalling technology, **in that** processing orders (A) are generated from the computer which is reliable in terms of signalling technology, from the commands (K) and the messages (M) fed to it, and are transmitted to the commercial computer or computers, **in that** the processing orders are processed there independently from one another, at least twice,
**in that** the results (E) which are produced in the process and/or intermediate results are transmitted to the reliable computer and checked there for correspondence of their contents in a way which is reliable in terms of signalling technology,
the reliable computer accepting only those results and/or intermediate results and outputting to the process (BA), in a way which is reliable in terms of signalling technology, only those control instructions (SB) derived therefrom, which have been made available by the commercial computer in such a way that they correspond on at least two occasions.

2. Method according to Claim 1, **characterized in that** identical or differing software is used for the at least two-fold execution of processing orders in the commercial computer.

3. Method according to Claim 1 or 2, **characterized in that** the time events which occur during the execution of the railway administration-specific software (BO) are synchronized by the computer (SR*) which is reliable in terms of signalling technology, at the request of the commercial computers.

4. Method according to one of Claims 1 to 3, **characterized in that** the results and/or intermediate results which are determined by the commercial computer are transmitted to the reliable computer by means of communication channels which are not reliable in terms of signalling technology.

5. Method according to one of Claims 1 to 4, **characterized in that** transmission of data in telegrams is provided, and **in that** the telegrams have signatures added to them, from which the respective receiving computer can detect whether these telegrams have been transmitted in a non-falsified form.

6. Method according to one of Claims 1 to 5, **characterized in that** a transmission of data in telegrams is provided, and **in that** the telegrams have signatures added to them from which the computer which is reliable in terms of signalling technology can detect whether falsifications have occurred in the program memories and the data memories of the commercial computers, or whether the CPU of a commercial computer is no longer operating correctly.

7. Method according to one of Claims 1 to 6, **characterized in that** the processing orders are processed essentially simultaneously in at least two commercial computers (R1, R2) in each case or are processed in a chronologically serial fashion in just one single computer, and **in that** the results and/or intermediate results which are obtained are fed to the reliable computer in each case in pairs for the purpose of comparison.

8. Method according to Claim 7, **characterized in that** telegrams have identifiers added to them, from which the reliable computer can detect whether these telegrams have actually been produced separately.

9. Method according to Claim 7, **characterized in that** the reliable computer detects, by reference to the result messages of the commercial computers which are fed to it via different inputs, whether these telegrams originate from different computers.

10. Method according to one of Claims 1 to 9, **characterized in that** systematic errors in the operating system software (BO) of the commercial computers are prevented by using differing operating systems on the computers (R1 to Rn) involved.

11. Method according to one of Claims 1 to 10, **characterized in that** systematic errors in the hardware of the commercial computers are prevented by using differing computer components on the computers (R1 to Rn) involved.

12. Device for carrying out a method for controlling a safety-critical railway operating process using at least one computer which is reliable in terms of signalling technology and which outputs to process elements in a way which is reliable in terms of signalling technology control instructions produced reliably in terms of signal technology from incoming commands in accordance with a set of railway operating rules, and feeds messages originating from said process elements to a process state monitoring system and process control system, **characterized in that** only a system software package whose programs enable the reliable computer to perform the inputting/outputting (K,E,M,A,SB) in a way which is reliable in terms of signalling technology and the data comparison which is reliable in terms of signalling technology is then implemented in the computer (SR*) which is reliable in terms of signalling technology, and **in that** at least one commercial computer (R1, R2) is provided which is not reliable in terms of signalling technology and in which the railway administration-specific software which includes the conditions and dependencies for the control of the railway operating process which are predefined by a railway administration by means of its railway operating rules (BO) is implemented, **in that** the reliable computer and the commercial computer are connected to a communications system (BUS) via which the reliable computer transmits processing orders (A) to the commercial computer and receives results (E) and/or intermediate results from it, the commercial computer being designed to execute each processing order independently of one another at least twice,
**in that** the reliable computer checks the results and/or intermediate results which are transmitted to it at least in pairs in each case by the commercial computer for correspondence between their contents in a way which is reliable in terms of signalling technology and derives therefrom control instructions (SB) for process elements (W, S) as a function of the check result and causes them to be output to the process via drivers provided for this purpose.

13. Device according to Claim 12, **characterized in that** it is also the case that only programs (BO) whose functionality has been proven are installed in the commercial computer.

14. Device according to Claim 12 or 13, **characterized in that** the commercial computer executes the processing orders with identical or differing software at least twice in each case.

15. Device according to one of Claims 12 to 14, **characterized in that** at least two commercial computers which execute the same processing orders in pairs independently of one another are provided.

16. Device according to one of Claims 12 to 15, **characterized in that**, in order to process different functionalities or sub-functionalities or to control and monitor different equipment parts, in each case a plurality of commercial computers (R1, R2) are provided in single-computer or multicomputer designs.

17. Device according to one of Claims 12 to 16, **characterized in that** the at least one commercial computer is an operating console computer via which commands (K) can be input into the reliable computer and messages (M) can be displayed.

18. Device according to one of Claims 12 to 17, **characterized in that** the reliable computer is an m v n computer system.

19. Device according to one of Claims 12 to 18, **characterized in that** the reliable computer is designed to detect, from identifiers which are added to the results and/or intermediate results which are transmitted by the at least one commercial computer, whether these results and/or intermediate results originate from different processing processes.

20. Device according to Claim 12, **characterized in that** the reliable computer outputs any control instructions to the process on two channels.

## Revendications

1. Procédé de commande d'un processus d'exploitation ferroviaire à sécurité critique en utilisant au moins un ordinateur sûr du point de vue de la technique de signalisation, lequel fournit à des éléments de processus, de manière sûre du point de vue de la technique de signalisation, des instructions de commande élaborées de manière sûre du point de vue de la technique de signalisation à partir d'ordres entrants et conformément à un règlement d'exploitation ferroviaire et lequel envoie des messages provenant de ces éléments de processus à une surveillance d'état de processus et commande de processus,
**caractérisé par le fait que**
dans l'ordinateur sûr (SR*), il est simplement enregistré un logiciel de système (V, PMS) dont les programmes permettent à l'ordinateur sûr d'effectuer une entrée / sortie sûre du point de vue de la technique de signalisation et la comparaison de données sûre du point de vue de la technique de signalisation,
le logiciel spécifique à l'administration ferroviaire (BO), qui contient les conditions et dépendances prescrites par une administration ferroviaire via son règlement d'exploitation ferroviaire pour le processus d'exploitation ferroviaire, est enregistré dans au moins un ordinateur commercial (R1, R2) qui n'est pas sûr du point de vue de la technique de signalisation,
l'ordinateur sûr du point de vue de la technique de signalisation produit des tâches de traitement (A) à partir des ordres (K) et messages (M) qui lui sont envoyés et les transmet à l'ordinateur commercial ou aux ordinateurs commerciaux,
les tâches de traitement sont exécutées là au moins deux fois indépendantes l'une de l'autre,
les résultats (E) ainsi obtenus et/ou des résultats intermédiaires sont transmis à l'ordinateur sûr et sont testés là de manière sûre du point de vue de la technique de signalisation pour vérifier si leurs contenus coïncident,
l'ordinateur sûr n'acceptant que des résultats et/ou résultats intermédiaires et n'envoyant au processus (BA) de manière sûre du point de vue de la technique de signalisation que des instructions de commande (SB) déduites de ces résultats, qui ont été fournis par l'ordinateur commercial en au moins deux exemplaires qui coïncident.

2. Procédé selon la revendication 1,
**caractérisé par le fait que**, pour exécuter au moins deux fois des tâches de traitement dans l'ordinateur commercial, on utilise des logiciels identiques ou des logiciels différents.

3. Procédé selon la revendication 1 ou 2,
**caractérisé par le fait que** les résultats temporels résultant de l'exécution du logiciel spécifique à l'administration ferroviaire (BO) sont synchronisés par l'ordinateur sûr du point de vue de la technique de signalisation (SR*) à la demande des ordinateurs commerciaux.

4. Procédé selon l'une des revendications 1 à 3,
**caractérisé par le fait que** les résultats et/ou résultats intermédiaires déterminés par l'ordinateur commercial sont transmis à l'ordinateur sûr par l'intermédiaire de canaux de communication qui ne sont pas sûrs du point de vue de la technique de signalisation.

5. Procédé selon l'une des revendications 1 à 4,
**caractérisé par le fait qu'**il est prévu une transmission de données par télégrammes et qu'on adjoint aux télégrammes des signatures à partir desquelles l'ordinateur respectivement récepteur peut savoir si ces télégrammes ont été transmis sans altération.

6. Procédé selon l'une des revendications 1 à 5,
**caractérisé par le fait qu'**il est prévu une transmission de données par télégrammes et qu'on adjoint aux télégrammes des signatures à partir desquelles l'ordinateur sûr du point de vue de la technique de signalisation peut savoir si des altérations sont apparues dans les mémoires de programmes et de données des ordinateurs commerciaux ou si la CPU d'un ordinateur commercial ne travaille plus correctement.

7. Procédé selon l'une des revendications 1 à 6,
**caractérisé par le fait que** les tâches de traitement sont exécutées de manière sensiblement isochrone dans au moins à chaque fois deux ordinateurs commerciaux (R1, R2) ou sont exécutées en série dans le temps dans un seul ordinateur et que les résultats et/ou résultats intermédiaires déterminés sont envoyés à chaque fois deux par deux à l'ordinateur sûr en vue de la comparaison.

8. Procédé selon la revendication 7,
**caractérisé par le fait qu'**on adjoint aux télégrammes des identificateurs à partir desquels l'ordinateur sûr peut savoir si ces télégrammes ont effectivement été traités séparément.

9. Procédé selon la revendication 7,
**caractérisé par le fait que** l'ordinateur sûr vérifie à l'aide des messages de résultats qui lui sont envoyés via différentes entrées par les ordinateurs commerciaux si ces télégrammes proviennent de différents ordinateurs.

10. Procédé selon l'une des revendications 1 à 9,
**caractérisé par le fait que** des erreurs systématiques dans le logiciel de système d'exploitation (BO) des ordinateurs commerciaux sont exclues grâce à l'utilisation de systèmes d'exploitation différents sur les ordinateurs concernés (R1 à Rn).

11. Procédé selon l'une des revendications 1 à 10,
**caractérisé par le fait que** des erreurs systématiques dans le matériel des ordinateurs commerciaux sont exclues grâce à l'utilisation de composants différents dans les ordinateurs concernés (R1 à Rn).

12. Dispositif pour la mise en oeuvre d'un procédé pour la commande d'un processus d'exploitation ferroviaire à sécurité critique avec au moins un ordinateur sûr du point de vue de la technique de signalisation, lequel fournit pour des éléments de processus des instructions de commande élaborées de manière sûre du point de vue de la technique de signalisation à partir d'ordres entrants et conformément à un règlement d'exploitation ferroviaire et lequel envoie des messages provenant de ces éléments de processus à une surveillance d'état de processus et commande de processus,
**caractérisé par le fait que**
dans l'ordinateur sûr du point de vue de la technique de signalisation (SR*), il est simplement enregistré un logiciel de système dont les programmes permettent à l'ordinateur sûr d'effectuer l'entrée / sortie (K, E, M, A, SB) sûre du point de vue de la technique de signalisation et la comparaison de données sûre du point de vue de la technique de signalisation,
il est prévu au moins un ordinateur commercial (R1, R2) qui n'est pas sûr du point de vue de la technique de signalisation et dans lequel est mis en oeuvre le logiciel spécifique à l'administration ferroviaire qui contient les conditions et dépendances prescrites par une administration ferroviaire via son règlement d'exploitation ferroviaire (BO) pour la commande du processus d'exploitation ferroviaire,
l'ordinateur sûr et l'ordinateur commercial sont raccordés à un système de communication (BUS) par l'intermédiaire duquel l'ordinateur sûr transmet des tâches de traitement (A) aux ordinateurs commerciaux et reçoit de ceux-ci des résultats (E) et/ou des résultats intermédiaires,
l'ordinateur commercial étant conçu pour exécuter chaque tâche de traitement au moins deux fois indépendantes l'une de l'autre,
l'ordinateur sûr teste de manière sûre du point de vue de la technique de signalisation les résultats et/ou résultats intermédiaires qui lui sont transmis au moins à chaque fois deux par deux par l'ordinateur commercial pour vérifier si leurs contenus coïncident et, en fonction du résultat de test, il déduit des instructions de commande (SB) pour des éléments de processus (W, S) et provoque leur envoi au processus par l'intermédiaire de circuits d'attaque prévus à cet effet.

13. Dispositif selon la revendication 12,
**caractérisé par le fait que** ne sont aussi installés dans l'ordinateur commercial que des programmes (BO) dont la fonctionnalité a été prouvée.

14. Dispositif selon la revendication 12 ou 13,
**caractérisé par le fait que** l'ordinateur commercial exécute les tâches de traitement avec des logiciels identiques ou différents à chaque fois au moins deux fois.

15. Dispositif selon l'une des revendications 12 à 14,
**caractérisé par le fait qu'**il est prévu au moins deux ordinateurs commerciaux exécutant les mêmes tâches de traitement deux par deux indépendamment l'une de l'autre.

16. Dispositif selon l'une des revendications 12 à 15,
**caractérisé par le fait que**, pour l'exécution de différentes fonctionnalités ou sous-fonctionnalités ou pour la commande et la surveillance de différentes parties d'installation, il est prévu à chaque fois plusieurs ordinateurs commerciaux (R1, R2) dans une configuration mono-ordinateur ou multi-ordinateur.

17. Dispositif selon l'une des revendications 12 à 16,
**caractérisé par le fait que** le - au moins un - ordinateur commercial est un ordinateur de poste de travail par l'intermédiaire duquel des ordres (K) sont à entrer dans l'ordinateur sûr et des messages (M) sont à sortir pour l'affichage.

18. Dispositif selon l'une des revendications 12 à 17,
**caractérisé par le fait que** l'ordinateur sûr est un système à m parmi n ordinateurs.

19. Dispositif selon l'une des revendications 12 à 18,
**caractérisé par le fait que** l'ordinateur sûr est conçu pour savoir, à partir d'identificateurs qui sont adjoints aux résultats et/ou résultats intermédiaires transmis par le - au moins un - ordinateur commercial, si ces résultats et/ou résultats intermédiaires proviennent de différents processus de traitement.

20. Dispositif selon la revendication 12,
**caractérisé par le fait que** l'ordinateur sûr fournit d'éventuelles instructions de commande au processus sur deux canaux.
